(19) Europäisches Patentamt
European Patent Office
Office européen des brevets

(11) **EP 0 993 908 A2**

(12) **EUROPÄISCHE PATENTANMELDUNG**

(43) Veröffentlichungstag:
**19.04.2000 Patentblatt 2000/16**

(51) Int. Cl.⁷: **B24B 53/075**

(21) Anmeldenummer: **99120222.7**

(22) Anmeldetag: **09.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.10.1998 DE 19847723**

(71) Anmelder: **Haug, Erich**
**73272 Neidlingen (DE)**

(72) Erfinder: **Haug, Erich**
**73272 Neidlingen (DE)**

(74) Vertreter: **Ostertag, Reinhard**
**Patentanwälte**
**Dr. Ulrich Ostertag**
**Dr. Reinhard Ostertag**
**Eibenweg 10**
**70597 Stuttgart (DE)**

(54) **Abrichtwerkzeug für ein Zahnrad-Honwerkzeug, Zahnrad-Honwerkzeug und Honmaschine für ein solches Abrichtwerkzeug bzw. Honwerkzeug**

(57)      Ein Abrichtwerkzeug (56) für zur Herstellung von Zahnrädern dienende Honringe (50) hat eine Axialteilung (pz), die kleiner ist als die Axialteilung des Werkstückes. Die Axialteilung und die Breite von Abrichtwerkzeug (56) und Honring (50) sind so bemessen, daß ständig mehr als ein Eingriffspunkt (kp) zwischen Abrichtwerkzeug (56) und Honring (50) vorliegt.

Fig. 5

EP 0 993 908 A2

**Beschreibung**

Die Erfindung betrifft ein Abrichtwerkzeug für ein Zahnrad-Honwerkzeug, ein Zahnrad-Honwerkzeug sowie eine Honmaschine für ein solches Abrichtwerkzeug bzw. Honwerkzeug.

Zur Erzeugung der für geringe Geräuschentwicklung und hohe Standzeit notwendigen Oberflächenqualität von Zahnflanken werden im Maschinenbau, insbesondere bei der Getriebeherstellung, verwendete Zahnräder in einem letzten Arbeitsschritt gehont. Beim Honen arbeitet das Werkstück mit einem Honwerkzeug zusammen, welches im Prinzip die Form eines Zahnkranzes mit zur Verzahnung des Werkstückes passender Komplementärgeometrie hat. Durch die vom Honwerkzeug getragenen Schleifpartikel wird unter dynamischen Bedingungen (Abwälzen und Schlupf) die gewünschte letzte Feinbearbeitung der Zahnflanken durchgeführt.

Die Honwerkzeuge verschleißen bei dieser Feinbearbeitung der Werkstücke und müssen in regelmäßigen Abständen ihrerseits abgerichtet werden. Hierzu finden Abrichtwerkzeuge Verwendung, die in ihrer geometrischen Grundbeziehung gleich zum Honwerkzeug stehen wie ein Werkstück. Üblicherweise tragen die Abrichtwerkzeuge in einem Zahnkranzabschnitt auf der Außenfläche kleine Diamantpartikel.

Da die bekannten Abrichtwerkzeuge im wesentlichen die gleiche Geometrie haben wie die Werkstücke, die Honwerkzeuge hierzu komplementäre Zahnkranzabschnitte aufweisen, stehen bisher die Abrichtwerkzeuge mit den Honwerkzeugen zu einem gegebenen Zeitpunkt nur über einen einzigen Punkt in Berührung. Insbesondere beim Ineingriffkommen eines neuen Zahnes ergeben sich hierdurch starke lokale Belastungen beim Rücken der Zähne, wenn die Zähne in der durch die Drehachsen von Honwerkzeug und Abrichtwerkzeug vorgegebenen Mittenebene in intensiven Eingriff mit den Zähnen des Honwerkzeuges kommen. Man beobachtet daher an den bekannten Abrichtwerkzeugen einen an den axialen Enden der Zähne beginnenden Verschleiß der Diamantpartikel, der sich bei weiterer Benutzung des Abrichtwerkzeuges zur Mitte desselben hin fortsetzt.

Es ist daher notwendig, die Abrichtwerkzeuge in Abständen neu zu belegen und schleifen. Hierzu finden mit Diamant-Schleifscheiben arbeitende Zahnrad-Schleifmaschinen Verwendung.

Versäumt man das rechtzeitige Neubelegen der Abrichtwerkzeuge, so können diese nicht mehr verwendet werden, da der fortgeschrittene Verschleiß ein wieder Erreichen der Sollgeometrie ausschließt. Diamant-Abrichtwerkzeuge sind aber aufgrund ihrer Herstellung und von den Materialkosten her teuer.

Der vorliegenden Erfindung liegt daher die Aufgabe zugrunde, den Verschleiß der Abrichtwerkzeuge für Zahnrad-Honwerkzeuge zu vermindern.

Diese Aufgabe ist gelöst durch ein Abrichtwerkzeug mit den im Anspruch 1 angegebenen Merkmalen.

Bei dem erfindungsgemäßen Abrichtwerkzeug ist die Axialteilung und die Breite seiner Zähne so auf die Axialteilung und die Breite der Zähne des Honwerkzeuges abgestimmt, daß beim Abrichten ständig mehr als ein Zahn des Abrichtwerkzeuges mit den Zähnen des Honwerkzeuges in Eingriff steht.

Durch die erfindungsgemäß vorgesehene Erhöhung der Eingriffspunkte zwischen Abrichtwerkzeug und Honwerkzeug findet eine Verteilung der beim in-Eingriff-Kommen eines Zahnes auftretenden Kräfte auf eine größere Anzahl von Eingriffspunkten statt, so daß der lokale Verschleiß vermindert wird. Die Abrichtwerkzeuge können somit über einen größeren Zeitraum ohne ein Nach-Belegen, welches auf einer Zahnrad-Schleifmaschine erfolgt, verwendet werden und werden insgesamt besser ausgenützt. Die Nachbeleg-Zeiträume können vergrößert werden, und da das Belegen der Abrichtwerkzeuge sich sowieso nach der am weitesten verschlissenen Stelle richten muß, bleiben die Belegkosten für das Abrichtwerkzeug im wesentlichen unverändert. Der Zahnradhersteller braucht so auch nur eine kleinere Anzahl von Abrichtwerkzeugen auf Lager zu halten.

Vorteilhafte Weiterbildungen der Erfindung sind in den Unteransprüchen angegeben.

Mit der im Anspruch 2 angegebenen Erhöhung der Mindestanzahl gleichzeitig vorliegender Eingriffspunkte zwischen Abrichtwerkzeug und Honwerkzeug wird eine weitere Verbesserung der Standzeit durch noch gleichförmigere Abnützung des Abrichtwerkzeuges erhalten.

Wie eingangs dargelegt, entspricht die Axialteilung eines Honwerkzeug-Abrichtwerkzeuges normalerweise derjenigen des zu bearbeitenden Werkstückes. Das Gewährleisten der größeren Anzahl von Eingriffspunkten zwischen Abrichtwerkzeug und Honwerkzeug läßt sich bei dieser üblichen Gleichheit der Grundgeometrie von Werkstück und Honwerkzeug-Abrichtwerkzeug nur dann gewährleisten, wenn man die Breite (axiale Abmessung) von Honwerkzeug und Abrichtwerkzeug vergrößert. Mit der Weiterbildung der Erfindung gemäß Anspruch 3 wird erreicht, daß man den ständigen Mehrpunkt-Kontakt zwischen Abrichtwerkzeug und Honwerkzeug auch bei nicht stark erhöhten axialen Abmessungen dieser beiden Werkzeuge erhält.

Auch dann, wenn man die Erhöhung der Anzahl der Berührungspunkte zwischen Abrichtwerkzeug und Honwerkzeug durch Erhöhung des Achskreuzwinkels zwischen Abrichtwerkzeug und Honwerkzeug besorgt, wird es in der Praxis oft notwendig sein, auch die axiale Abmessung von Abrichtwerkzeug und Honwerkzeug zu vergrößern, um eine größere Anzahl von Eingriffspunkten, z.B. selbständige Eingriffspunkte, zu gewährleisten. Die vergrößerte Axialabmessung des Honwerkzeuges kann auch zum Honen von Werkstücken ausgenutzt werden. Dies kann entweder dadurch erfolgen, daß man während der Bearbeitung eines einzelnen Werkstückes eine entsprechend großen Hub aufweisende axiale Relativbewegung zwischen Werkstück und Honwerkzeug erzeugt, oder auch dadurch daß man beim Bearbeiten aufeinanderfolgender Werkstücke unterschiedliche axiale Bereiche des Honwerkzeuges zum Einsatz bringt.

Die Weiterbildung der Erfindung gemäß Anspruch 4 ermöglicht es, die aus Gründen des schonenden Eingriffes zwischen Abrichtwerkzeug und Honwerkzeug gewählte vergrößerte Breite (axiale Abmessung) des Honwerkzeuges segmentweise für ein Honen von aufeinanderfolgenden Werkstücken zu nutzen.

Üblicherweise erfolgt das Abrichten der Honwerkzeuge in der zur Herstellung der Werkstücke verwendeten Honmaschine. Es wird einfach anstelle eines Werkstückes ein Abrichtwerkzeug eingespannt, und die der Honmaschine zugeordnete numerische Steuerung lädt eine Abrichtroutine, bei welcher die Relativbewegungen zwischen Abrichtwerkzeug und Honwerkzeug etwas anders gewählt sind als die Relativbewegungen zwischen Werkstück und Honwerkzeug.

Bei einer Honmaschine gemäß Anspruch 6 kann man ein Abrichtwerkzeug verwenden, dessen Axialteilung sich von derjenigen des Werkstückes unterscheidet. Hierzu wird der Achskreuzwinkel zwischen der Abrichtwerkzeug-/Werkstück -Lagereinrichtung und der Honwerkzeug-Lagereinrichtung verändert.

Dabei bringt die Weiterbildung der Erfindung gemäß Anspruch 7 den Vorteil, daß zwischen der Bearbeitung von Werkstücken und dem Abrichten des Honrades auf einfache Weise umgeschaltet werden kann.

Diese Umschaltung erfolgt bei einer Honmaschine gemäß Anspruch 8 automatisch, indem eine Sensoreinrichtung erkennt, ob die erste Lagereinrichtung gerade ein Werkstück oder das Abrichtwerkzeug trägt.

Dieses Erkennen des gerade in der ersten Lagereinrichtung aufgespannten Objektes erfolgt gemäß Anspruch 9 auf besonders einfache Weise optisch. Die Sensoreinrichtung kann z.B. einen auf Streulicht ansprechenden Sensor aufweisen (der Diamantenbesatz des Abrichtwerkzeuges streut Licht stärker als die gefrästen Zahnflanken eines Werkstückes).

Man kann auch gemäß Anspruch 10 das Abrichtwerkzeug mit einer optisch lesbaren Marke versehen, z.B. die Stirnflächen der Zähne einfärben oder verspiegeln.

Mit der Weiterbildung der Erfindung gemäß Anspruch 11 wird erreicht, daß die vergrößerte Axialabmessung des Honwerkzeuges auch voll zum Honen von Werkstücken ausgenutzt wird, wobei man beim Bearbeiten aufeinanderfolgender Werkstücke oder Werkstückchargen unterschiedliche axiale Bereiche des Honwerkzeuges zum Einsatz bringt.

In weiterer Abwandlung der Erfindung kann man gemäß Anspruch 10 auch ein Multifunktions-Honwerkzeug vorsehen, welches aus unterschiedlichem Material gefertigte axiale Bereiche hat, von denen einer z.B. zum Grobhonen, der andere zum Feinhonen bestimmt ist. Diese Bereiche werden dann gemeinsam abgerichtet.

Nachstehend wird die Erfindung anhand von Ausführungsbeispielen unter Bezugnahme auf die Zeichnung näher erläutert. In dieser zeigen:

Figur 1: einen transversalen Schnitt durch eine Honmaschine;

Figur 2: einen longitudinalen Schnitt durch die in Figur 1 gezeigte Honmaschine;

Figur 3: ein Blockschaltbild einer Steuerung für verschiedene Servomotoren der in den Figuren 1 und gezeigten Honmaschine;

Figur 4: eine axiale Teilaufsicht auf den Eingriffsbereich eines Abrichtwerkzeuges und eines Honringes;

Figur 5: eine seitliche Aufsicht auf das Abrichtwerkzeug nach Figur 4 und auf die dahinterliegende Innenfläches eines mit diesem zusammenarbeitenden Abschnittes des Honwerkzeuges in vergrößertem Maßstabe;

Figur 6: eine ähnliche Ansicht wie Figur 5, in welcher die Verhältnisse beim herkömmlichen Abrichten von Zahnrad-Honwerkzeugen gezeigt sind; und

Figur 7: eine schematische seitliche Ansicht eines abgewandelten Honringes zum Honen von Zahnrädern.

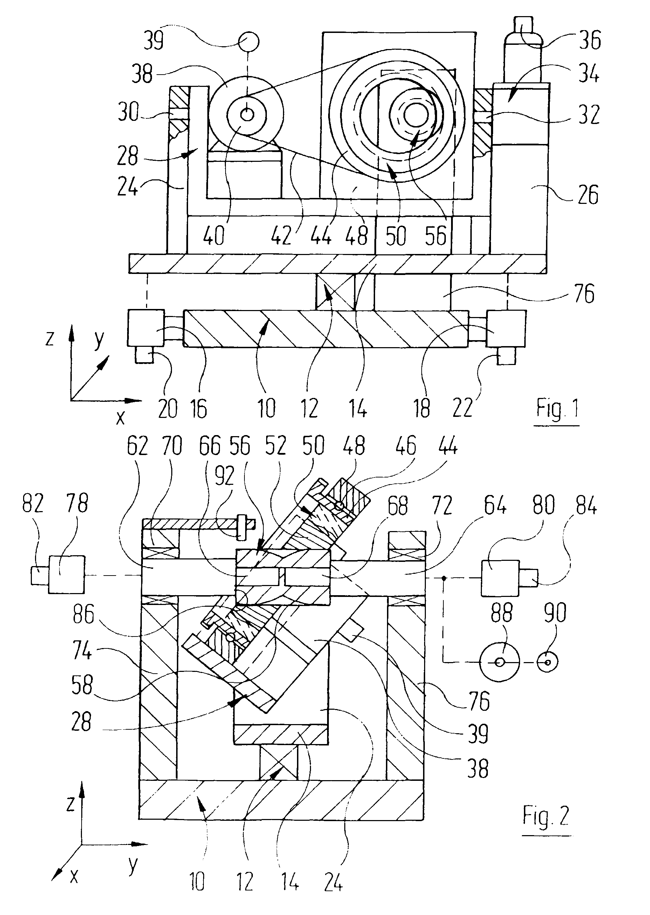

In Figuren 1 und 2 ist bei 10 schematisch ein Maschinenrahmen einer Honmaschine wiedergegeben. Dieser trägt über eine schematisch wiedergegebene x-y-Schlitteneinrichtung 12 (Kreuzschlitten) eine Grundplatte 14. Schematisch angedeutete Linearmotoren 16, 18, die am Maschinenrahmen 10 befestigt sind, dienen dazu, die Grundplatte 14 in x-Richtung bzw. y-Richtung des in Figur 1 angedeuteten Koordinatensystems zu bewegen. Entgegen den tatsächlichen Verhältnissen sind die mechanischen Verbindungen zwischen den Linearmotoren 16, 18 und der Grundplatte 14 in die Zeichenebene gekippt dargestellt. Die Momentan-Stellung der Grundplatte 14 in x- und y-Richtung werden durch Stellunggeber 20, 22 gemessen, die an die Linearmotoren 16, 18 angebaut sind.

Die Grundplatte 14 trägt über zwei Ständer 24, 26 einen insgesamt mit 28 bezeichneten Schwenkrahmen. Dieser hat senkrecht zur Zeichenebene von Figur 1 gesehen im wesentlichen U-förmige Gestalt, wobei auf die Außenseite des linken Schenkels des U eine Stummelwellen 30 aufgesetzt ist, die in einer Lageröffnunge des Ständers 24 läuft. In den rechten Schenkel des Schwenkrahmens 28 greift koaxial zur Stummelwelles 32 das Ende einer Motorwelle 32 drehfest ein. Auf diese Weise ist der Schwenkrahmen 28 um eine zur x-Achse parallele Achse verschwenkbar auf der Grundplatte 14 angebracht.

Die Motorwelle 32 gehört zu einem Getriebemotor 34, der über den Ständer 26 von der Grundplatte 14 getragen ist. Auf diese Weise läßt sich die Neigung des Schwenkrahmens 28 zur Horizontalen einstellen. Die Momentan-Neigung des Schwenkrahmens 28 wird von einem Stellungsgeber 36 gemessen, der an den Getriebemotor 34 angebaut ist.

Der Schwenkrahmen 28 trägt einen Antriebsmotor 38, auf dessen Ausgangswelle ein Kettenritzel 40 sitzt. Eine über dieses laufende Kette 42 treibt einen Antriebsring 44 an, der über ein Kugellager 46 in einer Lagerplatte 48 gelagert ist. Letztere ist senkrecht zur Oberfläche des unteren horizontalen Schenkels des Schwenkrahmens 28 am Schwenkrahmen 28 befestigt. Wie aus Figur 1 ersichtlich, schneiden sich die Achse der Stummelwelle 30 und der Motorwelle 32 und die Achse des Antriebsringes 44 unter rechtem Winkel.

In den Antriebsring 44 ist ein Zahnrad-Honring 50 drehfest, jedoch lösbar eingesetzt. Dieser ist auf seiner Innenfläche mit einer Vielzahl in Umfangsrichtung verteilter schräg gestellter Zähne 52 versehen. Die Zähne sind von einem außenliegenden Nabenabschnitt 54 des Honrades getragen, der drehfest und lösbar mit dem Antriebsring 44 verbunden ist.

Mit den Zähnen 52 des Honringes 50 kämmt ein insgesamt mit 56 bezeichnetes Abrichtwerkzeug. Dieses hat außenliegende Zähne 58 und einen Nabenabschnitt 60. Letzterer ist zwischen zwei Halbspindeln 62, 64 eingespannt. Diese sind an den einander zugewandten Enden mit einem vermindertem Durchmesser aufweisenden Zentrierabschnitt 66 bzw. 68 versehen, der spielfrei in den Nabenabschnitt 60 eingreift.

Die Halbspindeln 62, 64 laufen in Lagern 70, 72, die in Ständern 74, 76 angebracht sind, die sich von der Oberseite des Maschinenrahmens 10 nach oben erstrecken. Die durch die Halbspindeln 62, 64 vorgegebene Drehachse des Abrichtwerkzeuges 56 steht senkrecht zur Zeichenebene von Figur 1, entspricht also der y-Richtung.

Die Lager 70, 72 ermöglichen ein axiales Verschieben der Halbspindeln durch zugeordnete Linearmotoren 78, 80. An diese sind Stellungsgeber 82, 84 angebaut, welche die Ist-Stellung der Halbspindeln 62, 64 messen.

Durch axiales Auseinanderbewegen der Halbspindeln 62, 64 kann man die Zentrierabschnitte 66, 68 aus dem Abrichtwerkzeug 56 herausgewegen, so daß letzteres durch einen in der Zeichnung nicht wiedergegebenen Manipulator wegbewegt werden kann und durch zu bearbeitende Werkstücke (nicht gezeigt) ersetzt werden kann.

Durch axiales Aufeinanderzubewegen der Halbspindeln 62, 64 werden die Zentrierabschnitte 66, 68 in das Abrichtwerkzeug bzw. ein Werkstück eingeführt, wodurch das Abrichtwerkzeug bzw. das Werkstück zentriert wird. Mit den in Anlage kommen der die Zentrierabschnitte 66, 68 begrenzenden Schultern 86 der Halbspindeln 62, 64 ist dann das Abrichtwerkzeug bzw. das Werkstück drehfest mit den Halbspindeln 62, 64 verbunden, die so auch zur gemeinsamen Drehbewegung gekoppelt sind. Das Drehen der Halbspindeln 62, 64 und des zwischen diesen eingespannten Einrichtwerkzeuges bzw. Werkstückes erfolgt durch einen auf die Halbspindeln 62, 64 arbeitenden spindelantrieb 88 ,mit zugeordnetem Stellungsgeber 90, dessen Antriebsverbindung zu den Halbspindeln nur schematisch angedeutet ist.

Die Ist-Winkelstellung der Zähne des Abrichtwerkzeuges 56 bzw. eines Werkstückes mißt ein Meßkopf 92, der z.B. zwei mit den Zahnflanken von Abrichtwerkzeug bzw. Werkstück zusammenarbeitende Lichtschranken umfassen kann.

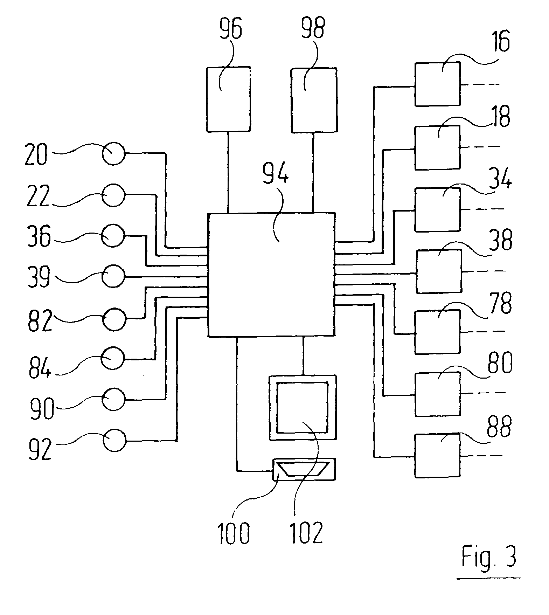

Wie aus Figur 3 ersichtlich, sind die verschiedenen Stellungsgeber 20, 22, 36, 39, 82, 84, 90 und der Meßkopf 92 mit zugeordneten Eingängen einer Steuereinheit 94 verbunden. Diese hat als periphäre Geräte einen Drucker 96, einen Massenspeicher 98 (z.B. Festplatte), ein Tastenfeld 100 sowie einen Monitor 102.

Die Steuereinheit 94 arbeitet nach zwei unterschiedlichen Programmen: Einem Programm zum Honen von Werkstücken und einem Programm zum Abrichten des Honringes 50 unter Verwendung des Abrichtwerkzeuges 56. Diese beiden Programme sind sehr ähnlich, unterscheiden sich aber durch die Größen der Zustellung zwischen Honrad und Werkstück bzw. Abrichtwerkzeug und durch den Neigungswinkel, unter welchem die Achse des Antriebsringes 44 zur Achse der Halbspindeln 62, 64 angestellt ist (Achskreuzwinkel).

Die Einstellbarkeit des Achskreuzwinkels wird deshalb benötigt, da die Zähne 58 des Abrichtwerkzeuges 56 eine andere (kleinere) Axialteilung aufweisen als die Zähne der Werkstücke. Dies erfolgt aus einem nun nachstehenden genauer geschilderten Grund.

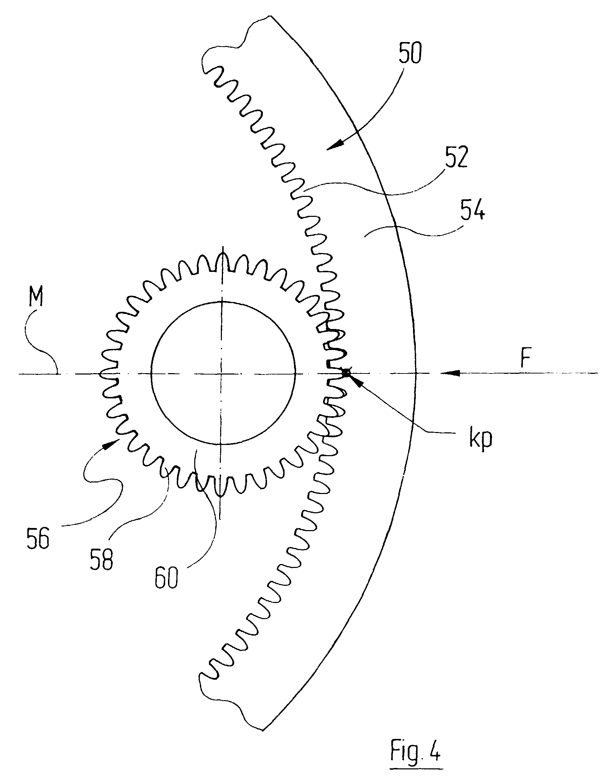

Figur 4 zeigt vergrößert den Eingriffsbereich der Stirnflächen von Abrichtwerkzeug 56 und Honring 50. Der Verlauf der Zähne außerhalb der Zeichenebene ist nicht wiedergegeben.

Man erkennt, daß zwischen den Zähnen 52 des Honringes 50 und den Zähnen 58 des Abrichtwerkzeuges 56 dann der intensivste Kontakt vorliegt, wenn ein Zahn auf der in Figur 4 mit M bezeichneten Mittenebene liegt, welche durch die Drehachsen von Honring 50 und Abrichtwerkzeug 56 vorgegeben ist. In dieser Stellung größter mechanischer Belastung (Lage kp des Eingriffspunktes) wirken auf die Zähne des Abrichtwerkzeuges 56 größere radiale Kräfte und Klemmkräfte ein, die zu Verschleiß der vom Abrichtwerkzeug getragenen Diamantpartikel führen. Diese Kräfte können dadurch vermindert werden, daß man die auf das Abrichtwerkzeug 56 vom Honring 50 ausgeübten Kräfte auf eine Mehrzahl von Eingriffspunkten verteilt.

Hierzu sind die Zähne 58 des Abrichtwerkzeuges 56 mit einer gegenüber herkömmlichen Abrichtwerkzeugen verkleinerten Axialteilung px angeordnet.

Dies sei an Hand eines praktischen Beispieles erläutert:

Zu honen seien die Zahnflanken eines Zahnrades mit folgenden Kenngrößen: Modul m von 1, 75, Zähnezahl z von 36; Schrägungswinkel β von 18° links; Verzahnungsbreite b von 15,2 mm.

Der verwendete Honring hat eine Breite bh (axiale Abmessung) von 22 mm und ermöglicht so einen Axialhub beim Honen von ± 3 mm.

Das zum Abrichten des Honringes verwendete Abrichtrad hat die gleiche Grundgeometrie wie das Werkstück, seine Verzahnungsbreite bd (= bk = Breite der kürzesten Kontaktlinie zwischen Abrichtrad und Honring) beträgt jedoch 16 mm. Beim Abrichten wird auch mit einem Axialhub von ± 3mm gearbeitet.

Damit ergibt sich eine Axialteilung px = pz/z = 17,79 mm . Die Anzahl der Kontaktpunkte KP zwischen Abrichtrad und Honrad ist KP = bd/px = 0,899 .

Dies bedeutet, daß das Abrichthrad beim Durchlaufen durch die Mittenebene über 90% der Strecke bk über einen einzigen Eingriffspunkt mit dem Honring zusammenarbeitet, über 10% des Durchlaufes dagegen kein Zahnkopf unter radialer Belastung steht. Beim Eintreten des nächsten Zahnes in die Mittenebene erfährt dieser den vollen Druck. Derartige Wechselbelastungen sind für den Verschleiß des Abrichtrades ungünstig.

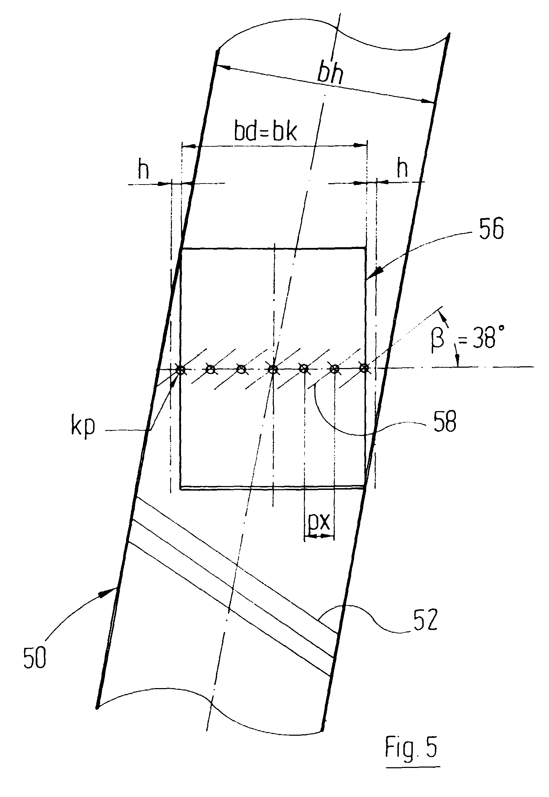

Bei der erfindungsgemäßen Ausbildung des Abrichtwerkzeuges 56, die in Figur 5 wiedergegeben ist, sind die Rücken der Zähne 58 unter einem Winkel β von 38° zur Achsrichtung angestellt. Aufgrund dieser Winkelwahl ist beim Abrichtwerkzeug gemäß Figur 5 die Axialteilung halbiert: Die Steigungshöhe pz beträgt 321,476 mm, und hieraus ergibt sich eine Axialteilung pz/z = 8,93 mm.

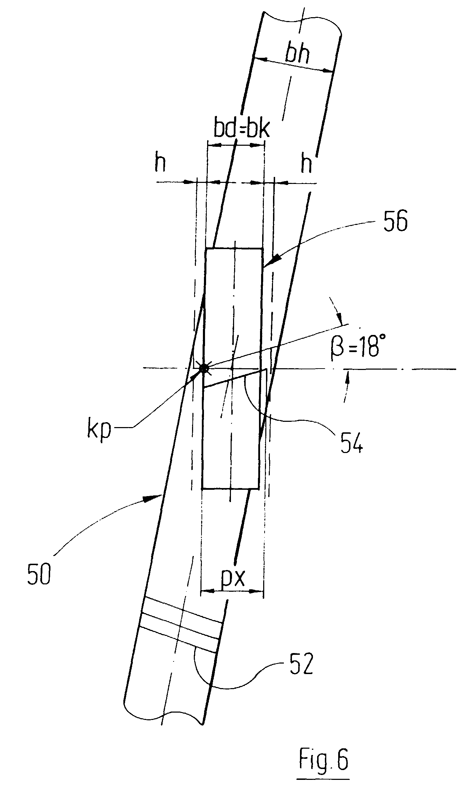

Zur Erhöhung der ständig vorliegenden Mindestanzahl von Eingriffspunkten zwischen Abrichtwerkzeug und Honwerkzeug ist bei dem Abrichtwerkzeug nach Figur 5 ferner die axiale Abmessung größer gewählt als bei dem klassischen Abrichtwerkzeug nach Figur 6. Gleiches gilt für die axiale Abmessung des Honringes. Bei dem erfindungsgemäßen Abrichtwerkzeug gemäß Figur 5 liegen hat man ständig jeweils mindestens sechs Eingriffspunkte zwischen Honring und Abrichtwerkzeug. Hierzu muß beträgt die Breite des Abrichtwerkzeuges
bk = KP x px = 6 x 8,93 mm = 53,58 mm , also etwa 54 mm. Bei einem Abricht-Axialhub von ± 3 mm ergibt sich dann eine Breit des Honringes von 60 mm.

Auf diese Weise sind die zwischen Abrichtwerkzeug und Honring übertragenen Kräfte erfindungsgemäß nur 1/6 derjenigen Kräfte, die beim klassichen Abrichten des Honwerkzeuges zu übertragen sind. Entsprechend niederer ist der Verschleiß des Abrichtwerkzeuges, und man hat keine abrupten Belastungswechsel an den Zahnköpfen beim Hindurchlaufen durch die Mittenebene.

Bei einer Werkstückbreite (bd von 16 mm wäre an sich die benötigte Honringbreite bei dem angegebenen Axialhub h von +/- 3 mm nur 22 mm.

Vergrößert man die oben berechnete Honringbereite von 60 mm auf 66 mm, kann somit der Honring in drei unterschiedlichen axialen Bereichen mit einer Breite mit jeweils 22 mm genutzt werden. Alternativ könnte man den Axialhub beim Honen vergrößern, falls gewünscht, und den Honring gleichförmig abnutzen.

In jedem Falle gilt, daß das Abrichten des Honringes erst nach der dreifachen Einsatzzeit erfolgen muß, so daß der Durchsatz der Honmaschine vergrößert wird.

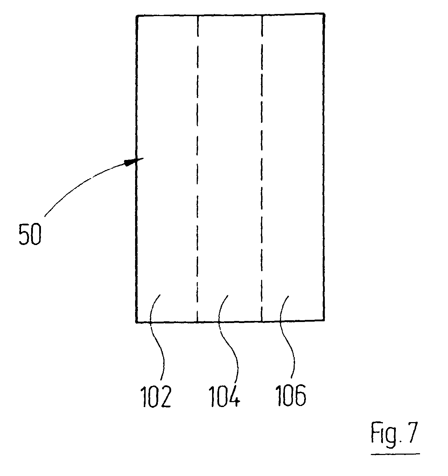

Alternativ kann man gemäß Figur 7 den Honring 50 aus drei Materialbereichen 104, 106, 108 aufbauen, die zum Honen eines Werkstückes mit zunehmender Feinheit ohne Umspannen des Werkstückes verwendet werden, indem man die Grundposition der das Werkstück tragenden Spindel nacheinander in die Mitten der Materialbereiche 104, 106, 108 stellt.

**Patentansprüche**

1. Abrichtwerkzeug für ein Zahnrad-Honwerkzeug (50), welches einen mit einem Antriebsteil (44) verbindbaren Nabenabschnitt (54) und eine Mehrzahl in Umfangsrichtung gleichverteilter Zähne (52) aufweist, mit einem mit einer Tragspindel (62, 64) verbindbaren Nabenabschnitt (60) und einer Mehrzahl in Umfangsrichtung gleichverteilter Zähne (58), die mit Schleifpartikeln, insbesondere Diamantpartikeln besetzt sind, dadurch gekennzeichnet, daß die Axialteilung und die Breite der Zähne (58) des Abrichtwerkzeuges (56) und die Axialteilung und die Breite der Zähne (52) des Honwerkzeuges (50) so aufeinander abgestimmt sind, daß zwischen Abrichtwerkzeug (56) und Honwerkzeug (50) ständig mehr als ein Eingriffspunkt vorliegt.

2. Abrichtwerkzeug nach Anspruch 1, dadurch gekennzeichnet, daß zwischen Abrichtwerkzeug (56) und Honwerkzeug (50) ständig drei bis sechs Eingriffspunkte vorliegen.

3. Abrichtwerkzeug nach Anspruch 1 oder 2, dadurch gekennzeichnet, daß seine Axialteilung (px) kleiner ist als die Axialteilung eines mit dem Honwerkzeug (50) zu bearbeitenden Werkstückes.

4. Honwerkzeug zur Verwendung mit einem Abrichtwerkzeug nach einem der Ansprüche 1 bis 3, dadurch gekennzeichnet, daß seine Breite (bh) im wesentlichen ein ganzzahliges Vielfaches derjenigen Strecke ist, welche durch Zusammensetzen der Breite (b) des Werkstückes und dem Abrichtgesamthub (2h) erhalten wird.

5. Honwerkzeug nach Anspruch 4, dadurch gekennzeichnet, daß es eine Mehrzahl axial aufeinanderfolgender Materialbereiche (102, 104, 106) aufweist, die aus unterschiedlich abrasivem Material bestehen.

6. Honmaschine mit einem Maschinenrahmen (10), mit einer auf dem Maschinenrahmen (10) angeordneten ersten Lagereinrichtung (62, 64) zum wahlweisen Haltern und Lagern eines Werkstückes bzw. eines Abrichtwerkzeuges (56), mit einer auf dem Maschinenrahmen (10) angeordneten zweiten Lagereinrichtung (40 bis 46) zum Lagern und Antreiben eines Honringes (50) und mit einer Einrichtung (78, 80) zum Erzeugen einer axialen und gegebenenfalls einer radialen Relativbewegung zwischen der ersten Lagereinrichtung (62, 64) und der zweiten Lagereinrichtung (38 bis 46), gekennzeichnet durch eine Einstelleinrichtung (28 bis 34) für den Achskreuzwinkel zwischen der ersten Lagereinrichtung (62, 64) und der zweiten Lagereinrichtung (40 bis 46).

7. Honmaschine nach Anspruch 6, dadurch gekennzeichnet, daß die Einstelleinrichtung (30 bis 34) wahlweise einen ersten Achskreuzwinkel für das Bearbeiten von Werkstücken durch das Honrad und einen zweiten Achskreuzwinkel für das Abrichten des Honrades (50) durch ein Abrichtwerkzeug (56) einstellt.

8. Honmaschine nach Anspruch 7, gekennzeichnet durch eine Sensoreinrichtung (92), die mit dem in der ersten Lagereinrichtung (62, 64) angebrachten Objekt zusammenarbeitet und ein erstes Ausgangssignal bereitstellt, wenn das Objekt ein Werkstück ist, und ein zweites Ausgangssignal bereitstellt, wenn das Objekt ein Abrichtwerkzeug (56) ist.

9. Honmaschine nach Anspruch 8, dadurch gekennzeichnet, daß die Sensoreinrichtung (92) ein auf Licht ansprechender Sensor ist.

10. Honmaschine nach Anspruch 9, dadurch gekennzeichnet, daß das Abrichtwerkzeug (56) eine mit dem Sensor zusammenarbeitende Markierung trägt.

11. Honmaschine nach einem der Ansprüche 6 bis 10, gekennzeichnet durch eine zweite Einstelleinrichtung (78), 80), zum Einstellen der axialen Grund-Relativlage zwischen den beiden Lagereinrichtungen (62, 64; 40 bis 46).

Fig. 1

Fig. 2

Fig. 3

Fig. 4

Fig. 5

bh

bd=bk

h          h

56

β =18°

kp

54

50

px

52

Fig.6

50

102   104   106

Fig. 7